# EUROPEAN PATENT APPLICATION

(11) **EP 4 807 818 A1**
(43) Date of publication of application: **16.09.2026**
(21) Application number: 24892698.2
(22) Date of filing: 10.05.2024
(51) Int. Cl.: H01M 4/66, H01M 4/62, H01M 10/0525

(54) **COMPOSITE CURRENT COLLECTOR AND PREPARATION METHOD THEREFOR, ELECTRODE SHEET, BATTERY, AND ELECTRIC DEVICE**

(30) Priority: 24.11.2023 CN 202311587450
(71) Applicant: Contemporary Amperex Technology Co., Limited, Ningde, Fujian 352100 (CN)
(72) Inventor: LIU, Xianghui, Ningde, Fujian 352100 (CN); LIU, Xin, Ningde, Fujian 352100 (CN); HUANG, Qisen, Ningde, Fujian 352100 (CN); LI, Mingling, Ningde, Fujian 352100 (CN); CAI, Qiguo, Ningde, Fujian 352100 (CN); LI, Cheng, Ningde, Fujian 352100 (CN)
(74) Representative: Gong, Jinping
(86) International application number: PCT/CN2024/092432
(87) International publication number: WO 2025/107533

(57) **Abstract**

A composite current collector and a preparation method thereof, an electrode plate, a battery, and an electric apparatus are provided. The composite current collector includes a support layer, an adhesive layer, and a conductive layer, where the adhesive layer and the conductive layer are sequentially laminated on two opposite surfaces of the support layer in a direction away from the support layer. The composite current collector effectively improves the peel strength between the support layer and the conductive layer, and reduces the risk of delamination of the composite current collector under prolonged exposure in liquid electrolyte.

## Description

### CROSS-REFERENCE

The present application incorporates by reference in its entirety Chinese Patent Application No. 202311587450.0, filed on November 24, 2023 and entitled "COMPOSITE CURRENT COLLECTOR AND PREPARATION METHOD THEREOF, ELECTRODE PLATE, BATTERY, AND ELECTRIC APPARATUS".

### TECHNICAL FIELD

The present application relates to the field of battery technology, and more particularly, to a composite current collector and a preparation method thereof, an electrode plate, a battery, and an electric apparatus.

### BACKGROUND

The statements herein merely provide background information related to the present application and do not necessarily constitute prior art.

Secondary batteries have advantages such as long cycle life, low environmental pollution, high output power, and high energy density, and are thus widely used in electric vehicles and consumer electronic products. The current collector is an indispensable component in secondary batteries, serving to conduct current and provide support. Compared to traditional current collectors, composite current collectors with a "metal layer-insulating polymer layer-metal layer" sandwich structure can enhance the energy density of secondary batteries. However, the peel strength between the metal layer and the insulating polymer layer in such composite current collectors is relatively low.

### SUMMARY

In view of this, the present application provides a composite current collector and a preparation method thereof, an electrode plate, a battery, and an electric apparatus, aimed at improving the peel strength between the support layer and the conductive layer, and reducing the risk of delamination of the composite current collector under prolonged exposure to liquid electrolyte.

According to a first aspect of the present application, a composite current collector is provided, including a support layer, an adhesive layer, and a conductive layer, where the adhesive layer and the conductive layer are sequentially laminated on two opposite surfaces of the support layer in a direction away from the support layer.

In the above composite current collector, the support layer and the conductive layer are connected via the adhesive layer, addressing the issue of thermal deformation of the support layer surface caused by evaporation or magnetron sputtering in traditional composite current collectors, effectively improving the peel strength between the support layer and the conductive layer, and reducing the risk of delamination of the composite current collector under prolonged exposure to liquid electrolyte.

In some embodiments, the adhesive layer includes an adhesive, the adhesive including one or more of an adhesive composition, polyurethane, epoxy resin, polyacrylate, polyvinyl acetate, unsaturated polyester, phenolic resin, urea-formaldehyde resin, polyolefin resin, silicone resin, ethylene-acrylic acid copolymer, ethylene-vinyl acetate copolymer, ethylene-vinyl alcohol copolymer, acrylic resin, polycarbonate, and polyamide, where the adhesive composition includes isocyanate and polyester polyol.

In some embodiments, the polyurethane includes one or more of thermoplastic polyurethane and reactive polyurethane.

In some embodiments, the adhesive includes one or more of the adhesive composition and the polyurethane.

In some embodiments, the adhesive contains isocyanate groups and hydroxyl groups, and a molar ratio of the isocyanate groups to the hydroxyl groups is 0.85 to 1.5, optionally 0.9 to 1.

In some embodiments, a peel strength between the support layer and the conductive layer is greater than or equal to 150 N/m, optionally 150 N/m to 600 N/m.

In some embodiments, based on a mass of the adhesive layer, a mass proportion of the adhesive is 50% to 100%.

In some embodiments, a thickness of the adhesive layer is 200 nm to 1500 nm, optionally 300 nm to 700 nm.

In some embodiments, the adhesive layer further includes a passivating agent.

In some embodiments, a mass ratio of the adhesive to the passivating agent is 1 to 2.5, optionally 1.2 to 2.

In some embodiments, the composite current collector further includes a passivation layer, the passivation layer being disposed between the adhesive layer and the conductive layer, where the passivation layer includes the passivating agent.

In some embodiments, a ratio of a thickness of the adhesive layer to a thickness of the passivation layer is greater than or equal to 1, optionally 1 to 500.

In some embodiments, the thickness of the passivation layer is 1 nm to 500 nm, optionally 10 nm to 200 nm.

In some embodiments, the passivating agent includes one or more of organic phosphate, chromate, dichromate, Al₂O₃, SiO₂, and Si₃N₄.

In some embodiments, the organic phosphate includes one or more of hydroxyethylidene diphosphonic acid, diethylenetriamine penta(methylene phosphonic acid), triethylenetetramine hexa(methylene phosphonic acid), and ethylenediamine tetra(methylene phosphonic acid).

In some embodiments, the chromate includes one or more of sodium chromate, potassium chromate, magnesium chromate, and silver chromate.

In some embodiments, the dichromate includes one or more of ammonium dichromate, potassium dichromate, sodium dichromate, and magnesium dichromate.

In some embodiments, the passivating agent includes one or more of the organic phosphate, the chromate, and the dichromate, and based on a mass of the composite current collector, a mass proportion of phosphorus and/or chromium is less than or equal to 0.3%, optionally 0.001% to 0.1%.

In some embodiments, a surface of the support layer adjacent to the adhesive layer has a dyne value ≥40, optionally 40 to 60.

In some embodiments, a surface of the support layer adjacent to the adhesive layer has a roughness ≥0.1 µm, optionally 0.1 µm to 2 µm.

In some embodiments, a surface of the conductive layer away from the adhesive layer has a roughness of 0.1 µm to 2 µm.

In some embodiments, a thickness of the conductive layer is 500 nm to 2500 nm, optionally 800 nm to 2000 nm.

In some embodiments, the conductive layer includes a conductive material.

In some embodiments, based on a mass of the conductive layer, a mass proportion of the conductive material is greater than or equal to 99.5%.

In some embodiments, the conductive material includes one or more of a metallic conductive material and a carbon-based conductive material.

In some embodiments, the metallic conductive material includes one or more of aluminum, copper, nickel, titanium, silver, nickel-copper alloy, and aluminum-zirconium alloy.

In some embodiments, the carbon-based conductive material includes one or more of graphite, acetylene black, graphene, and carbon nanotubes.

In some embodiments, a thickness of the support layer is 2 µm to 40 µm, optionally 3 µm to 8 µm.

In some embodiments, the support layer includes one or more of a polymer material and a polymer-based composite material.

In some embodiments, the polymer material includes one or more of polyamide, polyimide, polyethylene terephthalate, polybutylene terephthalate, polyethylene naphthalate, polycarbonate, polyethylene, polypropylene, polypropene, acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, silicone rubber, polyoxymethylene, polyphenylene oxide, polyphenylene sulfide, polyethylene glycol, polysulfide nitride polymer materials, polyphenylene, polypyrrole, polyaniline, polythiophene, polypyridine, cellulose, starch, protein, epoxy resin, phenolic resin, derivatives thereof, cross-linked products thereof, and copolymers thereof.

In some embodiments, the polymer-based composite material includes the polymer material and an additive, the additive including one or more of a metallic material and an inorganic non-metallic material.

In some embodiments, the metallic material includes one or more of aluminum, copper, nickel, iron, silver, titanium, and alloys thereof.

In some embodiments, the inorganic non-metallic material includes one or more of graphite, conductive carbon, aluminum oxide, silicon oxide, silicon carbide, and silicon dioxide.

According to a second aspect of the present application, a preparation method of the composite current collector according to the first aspect of the present application is provided, including:
forming the adhesive layer and the conductive layer sequentially laminated on two opposite surfaces of the support layer in a direction away from the support layer.

The composite current collector prepared by the above preparation method has a relatively high yield rate, which is conducive to mass production of composite current collectors.

In some embodiments, the step of forming the adhesive layer and the conductive layer sequentially laminated includes:
applying a first slurry containing an adhesive to a surface of at least one of the support layer and the conductive layer, and curing the first slurry to form the adhesive layer.

In some embodiments, the first slurry further includes the passivating agent.

In some embodiments, a mass ratio of the adhesive to the passivating agent in the first slurry is 1 to 2.5, optionally 1.2 to 2.

In some embodiments, the preparation method of the composite current collector further includes: forming the passivation layer between the adhesive layer and the conductive layer.

In some embodiments, forming the passivation layer includes: applying a second slurry containing the passivating agent to a surface of the conductive layer, and curing the second slurry to form the passivation layer.

In some embodiments, the passivating agent includes one or more of organic phosphate, chromate, dichromate, Al₂O₃, SiO₂, and Si₃N₄.

In some embodiments, the organic phosphate includes one or more of hydroxyethylidene diphosphonic acid, diethylenetriamine penta(methylene phosphonic acid), triethylenetetramine hexa(methylene phosphonic acid), and ethylenediamine tetra(methylene phosphonic acid).

In some embodiments, the chromate includes one or more of sodium chromate, potassium chromate, magnesium chromate, and silver chromate.

In some embodiments, the dichromate includes one or more of ammonium dichromate, potassium dichromate, sodium dichromate, and magnesium dichromate.

According to a third aspect of the present application, an electrode plate is provided, including at least one of the composite current collector according to the first aspect and the composite current collector prepared by the preparation method according to the second aspect.

The electrode plate of the present application includes at least one of the composite current collector provided by the present application and the composite current collector prepared by the preparation method provided by the present application, and thus has at least the same advantages as the composite current collector or the composite current collector prepared by the preparation method.

According to a fourth aspect of the present application, a battery is provided, including the composite current collector according to the first aspect of the present application or the electrode plate according to the third aspect of the present application.

The battery of the present application includes the composite current collector provided by the present application or the electrode plate provided by the present application, and thus has at least the same advantages as the composite current collector or the electrode plate.

According to a fifth aspect of the present application, an electric apparatus is provided, including the battery according to the fourth aspect.

The electric apparatus of the present application includes the battery provided by the present application, and thus has at least the same advantages as the battery.

The details of one or more embodiments of the present application are set forth in the accompanying drawings and description below. Other features, objectives, and advantages of the present application will become apparent from the specification, drawings, and claims.

### BRIEF DESCRIPTION OF DRAWINGS

To better describe and illustrate the embodiments or examples provided by the present application, reference may be made to one or more drawings. The additional details or examples used to describe the drawings should not be considered as limiting the scope of the disclosed application, the presently described embodiments or examples, or the best mode of these applications as currently understood. In the drawings, identical reference numerals denote identical components. In the drawings:
FIG. 1 is a schematic diagram of a composite current collector according to an embodiment of the present application.
FIG. 2 is a schematic diagram of a composite current collector according to another embodiment of the present application.
FIG. 3 is a schematic diagram of a battery cell according to an embodiment of the present application.
FIG. 4 is an exploded view of the battery cell shown in FIG. 3 according to an embodiment of the present application.
FIG. 5 is a schematic diagram of a battery module according to an embodiment of the present application.
FIG. 6 is a schematic diagram of a battery pack according to an embodiment of the present application.
FIG. 7 is an exploded view of the battery pack shown in FIG. 6 according to an embodiment of the present application.
FIG. 8 is a schematic diagram of an electric apparatus using a secondary battery according to an embodiment of the present application as a power source.

### Description of reference signs:

1, battery pack; 2, upper case; 3, lower case; 4, battery module; 5, battery cell; 51, housing; 52, electrode assembly; 53, cover plate; 6, electric apparatus; 7, composite current collector; 71, support layer; 72, adhesive layer; 73, conductive layer; 74, passivation layer.

### DESCRIPTION OF EMBODIMENTS

Hereinafter, some embodiments of the composite current collector and preparation method thereof, electrode plate, battery, and electric apparatus of the present application are described in detail with appropriate reference to the drawings. However, unnecessary detailed descriptions may be omitted. For example, detailed descriptions of well-known matters or redundant descriptions of substantially identical structures may be omitted. This is to avoid unnecessary verbosity in the following description and to facilitate understanding by those skilled in the art. Furthermore, the drawings and the following description are provided for those skilled in the art to fully understand the present application and are not intended to limit the subject matter described in the claims.

The "ranges" disclosed in the present application may be defined in the form of a lower limit and an upper limit, where a given range is defined by selecting a lower limit and an upper limit, and the selected lower and upper limits define the boundaries of a specific range. Ranges defined in this manner may include or exclude the endpoints, and any endpoint may be independently included or excluded, and may be arbitrarily combined, that is, any lower limit may be combined with any upper limit to form a range. For example, if ranges of 60-120 and 80-110 are listed for a specific parameter, it is understood that ranges of 60-110 and 80-120 are also contemplated. Additionally, if minimum range values of 1 and 2 are listed, and maximum range values of 3, 4, and 5 are listed, the following ranges are all contemplated: 1-3, 1-4, 1-5, 2-3, 2-4, and 2-5. In the present application, unless otherwise specified, the numerical range "a-b" represents an abbreviated representation of any real number combination between a and b, where a and b are both real numbers. For example, the numerical range "0-5" means that all real numbers between "0-5" have been fully listed herein, and "0-5" is merely an abbreviated representation of these numerical combinations. Additionally, when a parameter is expressed as an integer ≥2, it is equivalent to listing that the parameter is, for example, an integer 2, 3, 4, 5, 6, 7, 8, 9, 10, 11, 12, and the like. For example, when a parameter is expressed as an integer selected from "2-10," it is equivalent to listing the integers 2, 3, 4, 5, 6, 7, 8, 9, and 10.

In the present application, references to "multiple," "plurality," and the like, unless otherwise specified, mean a quantity greater than or equal to 2. For example, "one or more" means one or more than two.

Unless otherwise specified, all embodiments and optional embodiments of the present application may be combined with each other to form new technical solutions.

References to "embodiment" herein mean that specific features, structures, or characteristics described in connection with the embodiment may be included in at least one embodiment or implementation of the present application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein may be combined with other embodiments. References to "implementation" herein have a similar understanding.

Those skilled in the art can understand that, in the methods of various embodiments or implementations, the order in which the steps are written does not imply a strict execution sequence that imposes any limitation on the implementation process. The specific execution sequence of the steps should be determined by their functions and possible inherent logic. Unless otherwise specified, all steps of the present application may be performed sequentially or randomly, preferably sequentially. For example, the method includes steps (a) and (b), indicating that the method may include steps (a) and (b) performed sequentially, or steps (b) and (a) performed sequentially. For example, if it is mentioned that the method may further include step (c), it means that step (c) may be added to the method in any order, for example, the method may include steps (a), (b), and (c), or steps (a), (c), and (b), or steps (c), (a), and (b), and the like.

In the present application, technical features or solutions described with terms such as "contain," "include," or "comprise," unless otherwise specified, do not exclude additional members beyond those listed, and can be regarded as providing both closed features or solutions consisting of the listed members and open features or solutions including additional members beyond those listed. For example, A includes a1, a2, and a3, unless otherwise specified, may also include other members or may not include additional members, and can be regarded as providing both the feature or solution of "A consists of a1, a2, and a3" and the feature or solution of "A includes not only a1, a2, and a3 but also other members." In the present application, unless otherwise specified, A (for example, B) indicates that B is a non-limiting example of A, and it can be understood that A is not limited to B.

In the present application, "optionally," "optional," means optional, that is, it refers to either of the two parallel options of "present" or "absent." If multiple "optional" elements appear in a technical solution, unless otherwise specified and there is no conflict or mutual constraint, each "optional" element is independent.

Conventional composite current collectors with a "metal-insulating polymer-metal" sandwich structure typically use methods such as evaporation or magnetron sputtering to prepare the conductive layer on the surface of the support layer. However, these methods cause issues such as thermal deformation of the support layer surface, resulting in low peel strength between the support layer and the conductive layer and a high risk of delamination under prolonged exposure to liquid electrolyte. In view of this, the present application provides a composite current collector including a support layer, an adhesive layer, and a conductive layer, where the adhesive layer and the conductive layer are sequentially laminated on two opposite surfaces of the support layer in a direction away from the support layer. In the above composite current collector, the support layer and the conductive layer are connected via the adhesive layer, addressing the issue of thermal deformation of the support layer surface caused by evaporation or magnetron sputtering in conventional composite current collectors, effectively improving the peel strength between the support layer and the conductive layer, and reducing the risk of delamination of the composite current collector under prolonged exposure to liquid electrolyte.

An embodiment of the present application provides a composite current collector including a support layer, an adhesive layer, and a conductive layer, where the adhesive layer and the conductive layer are sequentially laminated on two opposite surfaces of the support layer in a direction away from the support layer.

In the above composite current collector, the support layer and the conductive layer are connected via the adhesive layer, addressing the issue of thermal deformation of the support layer surface caused by evaporation or magnetron sputtering in conventional composite current collectors, effectively improving the peel strength between the support layer and the conductive layer, and reducing the risk of delamination of the composite current collector under prolonged exposure to liquid electrolyte.

In some embodiments, the above composite current collector may be a positive electrode current collector or a negative electrode current collector.

As a non-limiting example, the support layer has two opposite surfaces in its thickness direction, and the adhesive layer and the conductive layer are sequentially laminated on the two opposite surfaces of the support layer.

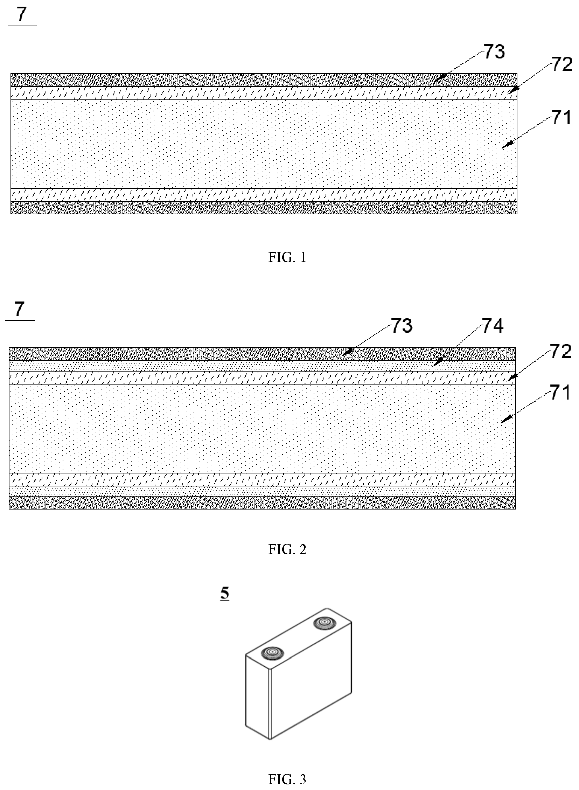

In some embodiments, referring to FIG. 1, the composite current collector 7 includes a support layer 71, an adhesive layer 72, and a conductive layer 73, where the adhesive layer 72 and the conductive layer 73 are sequentially laminated on two opposite surfaces of the support layer 71 in a direction away from the support layer 71.

In some embodiments, the adhesive layer includes an adhesive, the adhesive including one or more of an adhesive composition, polyurethane, epoxy resin, polyacrylate, polyvinyl acetate, unsaturated polyester, phenolic resin, urea-formaldehyde resin, polyolefin resin, silicone resin, ethylene-acrylic acid copolymer, ethylene-vinyl acetate copolymer, ethylene-vinyl alcohol copolymer, acrylic resin, polycarbonate, and polyamide, where the adhesive composition includes isocyanate and polyester polyol.

In some embodiments, the composition of the adhesive in the adhesive layer may be tested using chemical titration or an infrared spectrometer.

In some embodiments, the polyurethane includes one or more of thermoplastic polyurethane and reactive polyurethane.

In some embodiments, the adhesive includes one or more of the adhesive composition and the polyurethane. This helps to further improve the peel strength between the support layer and the conductive layer and further reduce the risk of delamination of the composite current collector under prolonged exposure to liquid electrolyte. The isocyanate in the adhesive composition contains isocyanate groups, the polyester polyol in the adhesive composition contains hydroxyl groups, and the polyurethane contains isocyanate groups and hydroxyl groups.

In some embodiments, the adhesive contains isocyanate groups and hydroxyl groups, and a molar ratio of the isocyanate groups to the hydroxyl groups is 0.85 to 1.5. When the molar ratio of isocyanate groups to hydroxyl groups is within the above range, the content of polar groups in the adhesive layer is relatively high, enhancing the bonding strength between the support layer and the conductive layer, thereby further improving the peel strength between the support layer and the conductive layer and further reducing the risk of delamination of the composite current collector under prolonged exposure to liquid electrolyte. It can be understood that the molar ratio of isocyanate groups to hydroxyl groups includes, but is not limited to, 0.85, 0.9, 0.95, 1, 1.05, 1.1, 1.2, 1.3, 1.4, and 1.5. Further, the molar ratio of isocyanate groups to hydroxyl groups in the adhesive is 0.9 to 1.

In some embodiments, the curing reaction conditions of the adhesive composition are 25°C to 50°C.

In the present application, °C represents degrees Celsius.

In some embodiments, the adhesive composition further includes water.

In some embodiments, a peel strength between the support layer and the conductive layer is greater than or equal to 150 N/m (newtons per meter). It can be understood that the peel strength between the support layer and the conductive layer includes, but is not limited to, 150 N/m, 200 N/m, 250 N/m, 300 N/m, 350 N/m, 400 N/m, 450 N/m, 500 N/m, 550 N/m, and 600 N/m.

In some embodiments, the peel strength between the support layer and the conductive layer is 150 N/m to 600 N/m.

In some embodiments, based on a mass of the adhesive layer, a mass proportion of the adhesive is 50% to 100%. When the mass proportion of the adhesive in the adhesive layer is within the above range, it helps to further improve the peel strength between the support layer and the conductive layer and further reduce the risk of delamination of the composite current collector under prolonged exposure to liquid electrolyte.

In some embodiments, a thickness of the adhesive layer is 200 nm to 1500 nm. Controlling the thickness of the adhesive layer within the above range can improve the welding effect of the tab. It can be understood that the thickness of the adhesive layer includes, but is not limited to, 200 nm, 300 nm, 500 nm, 700 nm, 900 nm, 1100 nm, 1300 nm, and 1500 nm. Further, the thickness of the adhesive layer is 300 nm to 700 nm.

In the present application, nm represents nanometers.

In some embodiments, the adhesive layer further includes a passivating agent. Thus, the adhesive layer containing the passivating agent can, on one hand, enhance the bonding effect between the conductive layer and the support layer, and on the other hand, protect the conductive layer, improving the corrosion resistance of the conductive layer during long-term cycling storage in liquid electrolyte, thereby further improving the peel strength and reliability between the support layer and the conductive layer, and further reducing the risk of delamination of the composite current collector under prolonged exposure to liquid electrolyte. Additionally, it can reduce the thickness of the composite current collector, improve its welding reliability, and reduce the energy density of the battery.

In some embodiments, a mass ratio of the adhesive to the passivating agent is 1 to 2.5. When the mass ratio of the adhesive to the passivating agent is within the above range, the adhesive layer simultaneously exhibits excellent bonding and passivation effects, thereby further improving the peel strength and reliability between the support layer and the conductive layer, further reducing the risk of delamination of the composite current collector under prolonged exposure to liquid electrolyte, and improving the welding reliability of the composite current collector. The mass ratio of the adhesive to the passivating agent includes, but is not limited to, 1, 1.2, 1.4, 1.6, 1.8, 2, 2.2, 2.4, and 2.5.

In some embodiments, the mass ratio of the adhesive to the passivating agent is 1.2 to 2.

In some embodiments, the composite current collector further includes a passivation layer, the passivation layer being disposed between the adhesive layer and the conductive layer, where the passivation layer includes the passivating agent. The passivation layer can protect the conductive layer, improving the corrosion resistance of the conductive layer during long-term cycling storage in liquid electrolyte, thereby further improving the peel strength and reliability between the support layer and the conductive layer, and further reducing the risk of delamination of the composite current collector under prolonged exposure to liquid electrolyte.

In some embodiments, referring to FIG. 2, the composite current collector 7 further includes the passivation layer 74, the passivation layer 74 being disposed between the adhesive layer 72 and the conductive layer 73, where the passivation layer includes the passivating agent. The passivation layer 74 disposed between the adhesive layer 72 and the conductive layer 73 can further improve the peel strength and reliability between the support layer 71 and the conductive layer 73, and further reduce the risk of delamination of the composite current collector 7 under prolonged exposure to liquid electrolyte.

In some embodiments, a ratio of a thickness of the adhesive layer to a thickness of the passivation layer is greater than or equal to 1. Controlling the ratio of the thickness of the adhesive layer to the thickness of the passivation layer within the above range, on one hand, results in a relatively high peel strength between the support layer and the conductive layer, and on the other hand, improves the welding effect of the tab.

In some embodiments, the ratio of the thickness of the adhesive layer to the thickness of the passivation layer is 1 to 500.

In some embodiments, the thickness of the passivation layer is 1 nm to 500 nm. This improves the uniformity of passivation of the composite current collector, thereby further enhancing the corrosion resistance of the conductive layer during long-term cycling storage in liquid electrolyte, while also considering the bonding effect between the conductive layer and the support layer and the welding effect of the composite current collector. The thickness of the passivation layer includes, but is not limited to, 1 nm, 50 nm, 100 nm, 150 nm, 200 nm, 250 nm, 300 nm, 350 nm, 400 nm, 450 nm, and 500 nm. Further, the thickness of the passivation layer is 10 nm to 200 nm.

In some embodiments, the passivating agent includes one or more of organic phosphate, chromate, dichromate, Al₂O₃, SiO₂, and Si₃N₄.

In some embodiments, the organic phosphate includes one or more of hydroxyethylidene diphosphonic acid, diethylenetriamine penta(methylene phosphonic acid), triethylenetetramine hexa(methylene phosphonic acid), and ethylenediamine tetra(methylene phosphonic acid).

In some embodiments, the chromate includes one or more of sodium chromate, potassium chromate, magnesium chromate, and silver chromate.

In some embodiments, the dichromate includes one or more of ammonium dichromate, potassium dichromate, sodium dichromate, and magnesium dichromate.

In some embodiments, the passivating agent includes one or more of the organic phosphate, the chromate, and the dichromate, and based on a mass of the composite current collector, a mass proportion of phosphorus and/or chromium is less than or equal to 0.3%. This can enhance the peel strength between the support layer and the conductive layer. The mass proportion of phosphorus and/or chromium includes, but is not limited to, 0.001%, 0.005%, 0.01%, 0.05%, 0.1%, 0.15%, 0.2%, 0.25%, and 0.3%.

In some embodiments, based on the mass of the composite current collector, the mass proportion of phosphorus and/or chromium is 0.001% to 0.1%.

In some embodiments, a surface of the support layer adjacent to the adhesive layer has a dyne value ≥40. When the dyne value of the surface of the support layer adjacent to the adhesive layer is within the above range, the support layer has an appropriate surface energy, thereby further improving the peel strength between the support layer and the conductive layer and further reducing the risk of delamination of the composite current collector under prolonged exposure to liquid electrolyte.

In some embodiments, the dyne value of the surface of the support layer adjacent to the adhesive layer is 40 to 60.

In some embodiments, a surface of the support layer adjacent to the adhesive layer has a roughness ≥0.1 µm (micrometers). When the roughness of the surface of the support layer adjacent to the adhesive layer is within the above range, the contact area between the support layer and the adhesive in the adhesive layer is within an appropriate range, thereby further improving the peel strength between the support layer and the conductive layer and further reducing the risk of delamination of the composite current collector under prolonged exposure to liquid electrolyte.

In some embodiments, the roughness of the surface of the support layer adjacent to the adhesive layer is 0.1 µm to 2 µm.

In some embodiments, in the composite current collector, the dyne value and roughness of the surface of the support layer adjacent to the adhesive layer can be tested by the following method: corrode and remove the conductive layer of the composite current collector, remove the adhesive layer using a degumming cleaner, and then test the dyne value and roughness of the surface of the support layer; the dyne value can be tested by drawing a line with a dyne pen of 40 or higher to observe whether there are breakpoints; if there are none, it indicates that the dyne value reaches 40; the roughness can be tested using a roughness tester, with a wavelength selectable at 0.8 µm; when the conductive layer includes aluminum, a sodium hydroxide solution of a certain concentration can be used to corrode and remove the conductive layer.

In some embodiments, a surface of the conductive layer away from the adhesive layer has a roughness of 0.1 µm to 2 µm. This can enhance the bonding strength between the conductive layer and the electrode active material layer while maintaining good conductivity of the composite current collector. It can be understood that the roughness of the surface of the conductive layer away from the adhesive layer includes, but is not limited to, 0.1 µm, 0.3 µm, 0.5 µm, 0.8 µm, 1 µm, 1.3 µm, 1.5 µm, 1.8 µm, and 2 µm.

In some embodiments, a thickness of the conductive layer is 500 nm to 2500 nm. This can reduce the internal resistance of the battery and improve the gravimetric energy density of the battery while maintaining good conductivity of the composite current collector. It can be understood that the thickness of the conductive layer includes, but is not limited to, 500 nm, 800 nm, 1000 nm, 1200 nm, 1500 nm, 1800 nm, 2000 nm, 2200 nm, and 2500 nm. Further, the thickness of the conductive layer is 800 nm to 2000 nm.

In some embodiments, the conductive layer includes a conductive material.

In some embodiments, based on a mass of the conductive layer, a mass proportion of the conductive material is greater than or equal to 99.5%. This can improve the conductivity of the composite current collector while meeting the peel strength requirements of the electrode plate.

In some embodiments, the conductive material includes one or more of a metallic conductive material and a carbon-based conductive material.

In some embodiments, the metallic conductive material includes one or more of aluminum, copper, nickel, titanium, silver, nickel-copper alloy, and aluminum-zirconium alloy.

In some embodiments, the carbon-based conductive material includes one or more of graphite, acetylene black, graphene, and carbon nanotubes.

In some embodiments, a thickness of the support layer is 2 µm to 40 µm. It can be understood that the thickness of the support layer includes, but is not limited to, 2 µm, 5 µm, 10 µm, 15 µm, 20 µm, 25 µm, 30 µm, 35 µm, and 40 µm.

In some embodiments, the thickness of the support layer is 3 µm to 8 µm.

In some embodiments, the support layer includes one or more of a polymer material and a polymer-based composite material.

In some embodiments, the polymer material includes one or more of polyamide, polyimide, polyethylene terephthalate, polybutylene terephthalate, polyethylene naphthalate, polycarbonate, polyethylene, polypropylene, polypropene, acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, silicone rubber, polyoxymethylene, polyphenylene oxide, polyphenylene sulfide, polyethylene glycol, polysulfide nitride polymer materials, polyphenylene, polypyrrole, polyaniline, polythiophene, polypyridine, cellulose, starch, protein, epoxy resin, phenolic resin, derivatives thereof, cross-linked products thereof, and copolymers thereof.

In some embodiments, the polymer-based composite material includes the polymer material and an additive, the additive including one or more of a metallic material and an inorganic non-metallic material.

In some embodiments, the metallic material includes one or more of aluminum, copper, nickel, iron, silver, titanium, and alloys thereof.

In some embodiments, the inorganic non-metallic material includes one or more of graphite, conductive carbon, aluminum oxide, silicon oxide, silicon carbide, and silicon dioxide.

Another embodiment of the present application provides a preparation method of the above composite current collector, including the following steps:
forming the adhesive layer and the conductive layer sequentially laminated on two opposite surfaces of the support layer in a direction away from the support layer.

In the above preparation method, bonding the conductive layer to the surface of the support layer via the adhesive layer addresses the issue of thermal deformation of the support layer surface in conventional composite current collectors, effectively improving the peel strength between the support layer and the conductive layer, and reducing the risk of delamination of the composite current collector under prolonged exposure to liquid electrolyte; additionally, the composite current collector prepared by this preparation method has a relatively high yield rate, which is conducive to mass production of composite current collectors.

In some embodiments, the step of forming the adhesive layer and the conductive layer sequentially laminated includes:
applying a first slurry containing the adhesive to a surface of at least one of the support layer and the conductive layer, and curing the first slurry to form the adhesive layer. As a non-limiting example, the solvent in the first slurry may include water.

In some embodiments, the first slurry further includes the passivating agent. Thus, the resulting adhesive layer contains both the adhesive and the passivating agent, which, on one hand, can enhance the bonding effect between the conductive layer and the support layer, and on the other hand, can protect the conductive layer, improving the corrosion resistance of the conductive layer during long-term cycling storage in liquid electrolyte, thereby further improving the peel strength and reliability between the support layer and the conductive layer, and further reducing the risk of delamination of the composite current collector under prolonged exposure to liquid electrolyte; additionally, it can reduce the thickness of the composite current collector, improve welding reliability, and reduce the energy density of the battery.

In some embodiments, a mass ratio of the adhesive to the passivating agent in the first slurry is 1 to 2.5. When the mass ratio of the adhesive to the passivating agent is within the above range, the prepared adhesive layer simultaneously exhibits excellent bonding and passivation effects, thereby further improving the peel strength and reliability between the support layer and the conductive layer, and further reducing the risk of delamination of the composite current collector under prolonged exposure to liquid electrolyte.

In some embodiments, the mass ratio of the adhesive to the passivating agent is 1.2 to 2.

In some embodiments, the preparation method of the composite current collector further includes: forming the passivation layer between the adhesive layer and the conductive layer. The passivation layer can protect the conductive layer, improving the corrosion resistance of the conductive layer during long-term cycling storage in liquid electrolyte, thereby further improving the peel strength and reliability between the support layer and the conductive layer, and further reducing the risk of delamination of the composite current collector under prolonged exposure to liquid electrolyte.

In some embodiments, the step of forming the passivation layer includes: applying a second slurry containing the passivating agent to a surface of the conductive layer, and curing the second slurry to form the passivation layer. It can be understood that when preparing a composite current collector including a passivation layer, the first slurry containing the adhesive may be applied to two opposite surfaces of the support layer, and the first slurry is cured to form the adhesive layer, followed by laminating the passivation layer on the surface of the adhesive layer away from the support layer; alternatively, the first slurry containing the adhesive may be applied to the surface of the passivation layer away from the conductive layer, and the first slurry is cured to form the adhesive layer, followed by laminating the adhesive layer on two opposite surfaces of the support layer.

In some optional embodiments, the passivating agent includes one or more of organic phosphate, chromate, dichromate, Al₂O₃, SiO₂, and Si₃N₄.

In some embodiments, the organic phosphate includes one or more of hydroxyethylidene diphosphonic acid, diethylenetriamine penta(methylene phosphonic acid), triethylenetetramine hexa(methylene phosphonic acid), and ethylenediamine tetra(methylene phosphonic acid).

In some embodiments, the chromate includes one or more of sodium chromate, potassium chromate, magnesium chromate, and silver chromate.

In some embodiments, the dichromate includes one or more of ammonium dichromate, potassium dichromate, sodium dichromate, and magnesium dichromate.

Another embodiment of the present application provides an electrode plate including at least one of the above composite current collector and the composite current collector prepared by the above preparation method. This helps to improve the energy density and cycle performance of the battery.

In some embodiments, the above electrode plate may be at least one of a positive electrode plate and a negative electrode plate.

Another embodiment of the present application further provides a battery including the above composite current collector or electrode plate. This helps to improve the energy density and cycle performance of the battery. The battery includes primary batteries and secondary batteries; secondary batteries include, but are not limited to, at least one of lithium-ion secondary batteries, sodium-ion batteries, and magnesium-ion batteries; primary batteries include, but are not limited to, lithium primary batteries.

Another embodiment of the present application further provides an electric apparatus including the above battery.

Additionally, the battery and electric apparatus of the present application are described below with appropriate reference to the drawings.

Typically, a secondary battery includes a positive electrode plate, a negative electrode plate, an electrolyte, and a separator. During the charging and discharging process of the battery, active ions intercalate and deintercalate back and forth between the positive electrode plate and the negative electrode plate. The electrolyte serves to conduct ions between the positive electrode plate and the negative electrode plate. The separator is disposed between the positive electrode plate and the negative electrode plate, primarily to prevent short-circuiting between the positive and negative electrodes while allowing ions to pass through.

### Positive Electrode Plate

It can be understood that the battery undergoes lithium (Li) intercalation and deintercalation and consumption during the charging and discharging process, and the Li content in the positive electrode plate varies at different discharge states of the battery. In the present application, unless otherwise specified, the Li content in the listed positive electrode active materials refers to the initial state of the material. When the positive electrode active material is applied to the positive electrode plate in a battery system, the Li content in the positive electrode active material typically changes after charge-discharge cycles. The Li content may be measured in terms of molar content, but is not limited thereto. Regarding "the Li content refers to the initial state of the material," the initial state of the material refers to the state before being incorporated into the positive electrode slurry. It can be understood that new materials obtained by appropriately modifying the listed positive electrode active materials are also within the scope of positive electrode active materials, where the appropriate modification refers to acceptable modification methods for positive electrode active materials, with non-limiting examples including coating modification.

In the present application, in the listed positive electrode active materials, the oxygen (O) content is only a theoretical value, and lattice oxygen release may cause variations in the molar content of oxygen, resulting in fluctuations in the actual O content. The O content may be measured in terms of molar content, but is not limited thereto.

The positive electrode plate includes a positive electrode current collector and a positive electrode active material layer disposed on at least one surface of the positive electrode current collector, where the positive electrode active material layer includes a positive electrode active material.

As a non-limiting example, the positive electrode current collector has two opposite surfaces in its thickness direction, and the positive electrode active material layer is disposed on either or both of the two opposite surfaces of the positive electrode current collector.

In some embodiments, the positive electrode current collector may use the composite current collector of the present application.

In some embodiments, the positive electrode current collector may use a metal foil or other composite current collectors. For example, as a metal foil, aluminum foil may be used. Other composite current collectors may include a polymer material base layer and a metal layer formed on at least one surface of the polymer material base layer. Other composite current collectors may be obtained by forming a metal material on a polymer material substrate. Non-limiting examples of the metal material in the positive electrode current collector may include one or more of aluminum, aluminum alloy, nickel, nickel alloy, titanium, titanium alloy, silver, and silver alloy. Non-limiting examples of the polymer material substrate in the positive electrode current collector may include one or more of substrates such as polypropylene (PP), polyethylene terephthalate (PET), polybutylene terephthalate (PBT), polystyrene (PS), and polyethylene (PE).

In some embodiments, the positive electrode active material may use positive electrode active materials known in the art for batteries. As a non-limiting example, the positive electrode active material may include one or more of the following materials: lithium-containing phosphates with an olivine structure, lithium transition metal oxides, and their respective modified compounds. However, the present application is not limited to these materials, and other conventional materials that can be used as positive electrode active materials for batteries may also be used. These positive electrode active materials may be used alone or in combination of two or more. Examples of lithium transition metal oxides may include, but are not limited to, one or more of lithium cobalt oxide (for example, LiCoO₂), lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their modified compounds. Non-limiting examples of lithium-containing phosphates with an olivine structure may include, but are not limited to, one or more of lithium iron phosphate, lithium iron phosphate-carbon composites, lithium manganese phosphate, lithium manganese phosphate-carbon composites, lithium manganese iron phosphate, and lithium manganese iron phosphate-carbon composites. Non-limiting examples of lithium cobalt oxide may include LiCoO₂; non-limiting examples of lithium nickel oxide may include LiNiO₂; non-limiting examples of lithium manganese oxide may include LiMnO₂, LiMn₂O₄, and the like; non-limiting examples of lithium nickel cobalt manganese oxide may include LiNi₁/₃Co₁/₃Mn₁/₃O₂ (also referred to as NCM₃₃₃), LiNi₀.₅Co₀.₂Mn₀.₃O₂ (also referred to as NCM₅₂₃), LiNi₀.₅Co₀.₂₅Mn₀.₂₅O₂ (also referred to as NCM₂₁₁), LiNi₀.₆Co₀.₂Mn₀.₂O₂ (also referred to as NCM₆₂₂), LiNi₀.₈Co₀.₁Mn₀.₁O₂ (also referred to as NCM₈₁₁), and the like. Non-limiting examples of lithium nickel cobalt aluminum oxide may include LiNi₀.₈Co₀.₁₅Al₀.₀₅O₂.

The positive electrode active material includes a sodium-ion active material.

As an example, the sodium-ion active material may include one or more of the following materials: sodium transition metal oxides, polyanionic compounds, and Prussian blue compounds. However, the present application is not limited to these materials, and other conventional materials that can be used as positive electrode active materials for sodium-ion batteries may also be used.

As an optional technical solution of the present application, in the sodium transition metal oxides, the transition metal may include one or more of Mn, Fe, Ni, Co, Cr, Cu, Ti, Zn, V, Zr, and Ce. Non-limiting examples of sodium transition metal oxides may include NaₓMO₂, where M may include one or more of Ti, V, Mn, Co, Ni, Fe, Cr, and Cu, and 0 < x ≤ 1.

As an optional technical solution of the present application, the polyanionic compound may be a class of compounds having sodium ions, transition metal ions, and tetrahedral (YO₄)^{n₋} anion units. The transition metal may include one or more of Mn, Fe, Ni, Co, Cr, Cu, Ti, Zn, V, Zr, and Ce; Y may be one or more of P, S, and Si; n represents the valence state of (YO₄)^{n₋}.

The polyanionic compound may also be a class of compounds having sodium ions, transition metal ions, tetrahedral (YO₄)^{n₋} anion units, and halogen anions. The transition metal may include one or more of Mn, Fe, Ni, Co, Cr, Cu, Ti, Zn, V, Zr, and Ce; Y may be one or more of P, S, and Si; n represents the valence state of (YO₄)^{n₋}; the halogen may be one or more of F, Cl, and Br.

The polyanionic compound may also be a class of compounds having sodium ions, tetrahedral (YO₄)^{n₋} anion units, polyhedral units (ZOγ)^{m+}, and optional halogen anions. Y may be one or more of P, S, and Si; n represents the valence state of (YO₄)^{n₋}; Z represents a transition metal, which may include one or more of Mn, Fe, Ni, Co, Cr, Cu, Ti, Zn, V, Zr, and Ce; m represents the valence state of (ZOγ)^{m+}; the halogen may be one or more of F, Cl, and Br.

The polyanionic compound may include one or more of NaFePO₄, Na₃V₂(PO₄)₃ (sodium vanadium phosphate, abbreviated as NVP), Na₄Fe₃(PO₄)₂(P₂O₇), NaM'PO₄F, and Na₃(VO_{γ})₂(PO₄)₂F_{3-2_{γ}} (0 ≤ y ≤ 1). Where, M' in NaM'PO₄F may include one or more of V, Fe, Mn, and Ni.

The Prussian blue compound may be a class of compounds having sodium ions, transition metal ions, and cyanide ions (CN⁻). The transition metal may include one or more of Mn, Fe, Ni, Co, Cr, Cu, Ti, Zn, V, Zr, and Ce. Non-limiting examples of Prussian blue compounds may include NaₐMe_{b}Me'_{c}(CN)₆, where Me and Me' may each independently be one or more of Ni, Cu, Fe, Mn, Co, and Zn, 0 < a ≤ 2, 0 < b < 1, 0 < c < 1.

In some embodiments, the positive electrode active material layer may optionally further include a binder. As a non-limiting example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode active material layer may optionally further include a conductive agent. As a non-limiting example, the conductive agent may include one or more of superconducting carbon, acetylene black, carbon black, Ketjen black, carbon dots, carbon nanotubes, graphene, and carbon nanofibers.

In some embodiments, the positive electrode plate may be prepared by the following method: dispersing the components for preparing the positive electrode plate, such as the positive electrode active material, conductive agent, binder, and any other components, in a solvent to form a positive electrode slurry; applying the positive electrode slurry on at least one surface of the positive electrode current collector, and obtaining the positive electrode plate after processes such as drying and cold pressing. The type of solvent may be selected from, but is not limited to, any of the aforementioned implementations, such as N-methylpyrrolidone (NMP). The surface of the positive electrode current collector coated with the positive electrode slurry may be a single surface or both surfaces of the positive electrode current collector. The surface of the positive electrode current collector coated with the positive electrode slurry may be a single surface or both surfaces of the positive electrode current collector. The solid content of the positive electrode slurry may be 40wt% to 80wt%. The viscosity of the positive electrode slurry at room temperature may be adjusted to 5000 mPa·s to 25000 mPa·s. When applying the positive electrode slurry, the coating weight per unit area (excluding the solvent) may be 15 mg/cm² to 35 mg/cm². The compacted density of the positive electrode plate may be 3.0 g/cm³ to 3.6 g/cm³, optionally 3.3 g/cm³ to 3.5 g/cm³.

### Negative Electrode Plate

The negative electrode plate includes a negative electrode current collector and a negative electrode active material layer disposed on at least one surface of the negative electrode current collector, where the negative electrode active material layer includes a negative electrode active material.

As a non-limiting example, the negative electrode current collector has two opposite surfaces in its thickness direction, and the negative electrode active material layer is disposed on either or both of the two opposite surfaces of the negative electrode current collector.

In some embodiments, the negative electrode current collector may use the composite current collector of the present application.

In some embodiments, the negative electrode current collector may use a metal foil or other composite current collectors. For example, as a metal foil, copper foil may be used. Other composite current collectors may include a polymer material base layer and a metal layer formed on at least one surface of the polymer material base layer. Other composite current collectors may be obtained by forming a metal material on a polymer material substrate. Non-limiting examples of the metal material in the negative electrode current collector may include one or more of copper, copper alloy, nickel, nickel alloy, titanium, titanium alloy, silver, and silver alloy. Non-limiting examples of the polymer material substrate in the negative electrode current collector may include one or more of substrates such as polypropylene (PP), polyethylene terephthalate (PET), polybutylene terephthalate (PBT), polystyrene (PS), and polyethylene (PE).

In some embodiments, the negative electrode active material may use negative electrode active materials known in the art for batteries. As a non-limiting example, the negative electrode active material may include one or more of the following materials: artificial graphite, natural graphite, soft carbon, hard carbon, silicon-based materials, tin-based materials, and lithium titanate. The silicon-based material may include one or more of elemental silicon, silicon oxide compounds, silicon-carbon composites, silicon-nitrogen composites, and silicon alloys. The tin-based material may include one or more of elemental tin, tin oxide compounds, and tin alloys. However, the present application is not limited to these materials, and other conventional materials that can be used as negative electrode active materials for batteries may also be used. These negative electrode active materials may be used alone or in combination of two or more.

In some embodiments, the negative electrode active material layer may optionally further include a binder. The binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer may optionally further include a conductive agent. The conductive agent may include one or more of superconducting carbon, acetylene black, carbon black, Ketjen black, carbon dots, carbon nanotubes, graphene, and carbon nanofibers.

In some embodiments, the negative electrode active material layer may optionally further include other additives, such as thickeners (for example, sodium carboxymethyl cellulose (CMC-Na)).

In some embodiments, the negative electrode plate may be prepared by the following method: dispersing the components for preparing the negative electrode plate, such as the negative electrode active material, conductive agent, binder, and any other components, in a solvent (non-limiting examples of the solvent include deionized water) to form a negative electrode slurry; applying the negative electrode slurry on at least one surface of the negative electrode current collector, and obtaining the negative electrode plate after processes such as drying and cold pressing. The surface of the negative electrode current collector coated with the negative electrode slurry may be a single surface or both surfaces of the negative electrode current collector. The solid content of the negative electrode slurry may be 40wt% to 60wt%. The viscosity of the negative electrode slurry at room temperature may be adjusted to 2000 mPa·s to 10000 mPa·s. When applying the negative electrode slurry, the coating weight per unit area (excluding the solvent) may be 75 g/m² to 220 g/m². The compacted density of the negative electrode plate may be 1.0 g/cm³ to 1.8 g/cm³.

In the present application, mPa·s represents millipascal-seconds, g/m² represents grams per square meter, and g/cm³ represents grams per cubic centimeter.

In some embodiments, the positive electrode current collector and/or the negative electrode current collector use the composite current collector of the present application. It can be understood that only the positive electrode current collector may use the composite current collector of the present application, or only the negative electrode current collector may use the composite current collector of the present application, or both the positive electrode current collector and the negative electrode current collector may use the composite current collector of the present application.

### Electrolyte

The electrolyte serves to conduct ions between the positive electrode plate and the negative electrode plate. The present application has no particular limitation on the type of electrolyte, which can be selected according to needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluorophosphate (LiPO₂F₂), lithium difluoro(oxalato)borate (LiDFOB), lithium bis(oxalato)borate (LiBOB), lithium difluoro bis(oxalato)phosphate (LiDFOP), and lithium tetrafluoro(oxalato)phosphate (LiTFOP).

In some embodiments, the solvent may include one or more of ethylene carbonate (EC, 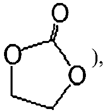 propylene carbonate (PC, 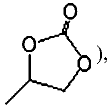 ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate 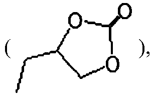 fluoroethylene carbonate (FEC), methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the liquid electrolyte may optionally further include additives. For example, the additives may include negative electrode film-forming additives, positive electrode film-forming additives, and additives that improve certain battery performances, such as additives that improve battery overcharge performance, additives that improve high-temperature or low-temperature performance of the battery, and the like.

In some embodiments, the additives in the liquid electrolyte may include, but are not limited to, one or more of fluoroethylene carbonate (FEC), difluoroethylene carbonate (DFEC), and trifluoromethyl ethylene carbonate (TFPC).

### Separator

In some embodiments, the secondary battery further includes a separator. The present application has no particular limitation on the type of separator, and any well-known porous structure separator with good chemical and mechanical stability may be selected.

In some embodiments, the material of the separator may include one or more of glass fiber, non-woven fabric, polyethylene, polypropylene, and polyvinylidene fluoride. The separator may be a single-layer film or a multilayer composite film, without particular limitation. When the separator is a multilayer composite film, the materials of each layer may be the same or different, without particular limitation.

In some embodiments, the thickness of the separator is 6 µm to 40 µm, optionally 12 µm to 20 µm.

In some embodiments, the positive electrode plate, negative electrode plate, and separator may be formed into an electrode assembly through a winding process or a lamination process.

In some embodiments, the secondary battery may include an outer package. The outer package may be used to encapsulate the above electrode assembly and electrolyte.

In some embodiments, the outer package of the secondary battery may be a hard shell, such as a hard plastic shell, an aluminum shell, or a steel shell. The outer package of the secondary battery may also be a soft package, such as a pouch-type soft package. The material of the soft package may be plastic, and non-limiting examples of the plastic may include one or more of polypropylene, polybutylene terephthalate, and polybutylene succinate.

The secondary battery includes at least one battery cell. The secondary battery may include one or more battery cells.

In the present application, unless otherwise specified, "battery cell" refers to the basic unit capable of converting chemical energy into electrical energy, and further, typically includes at least a positive electrode plate, a negative electrode plate, and an electrolyte. During the charging and discharging process of the battery, active ions intercalate and deintercalate back and forth between the positive electrode plate and the negative electrode plate. The electrolyte serves to conduct active ions between the positive electrode plate and the negative electrode plate.

The present application has no particular limitation on the shape of the battery cell, which may be cylindrical, square, or any other shape. For example, FIG. 3 is a battery cell 5 with a square structure as an example.

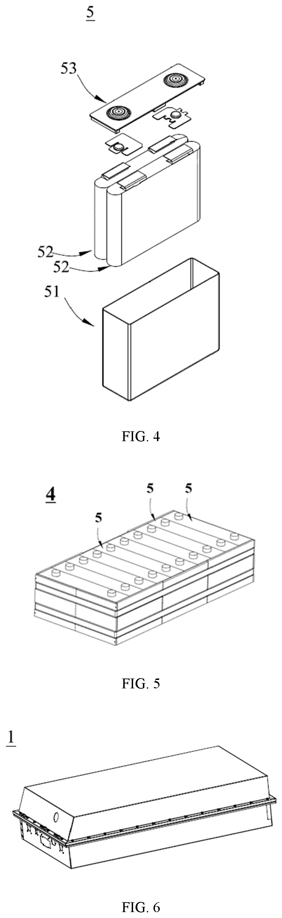

In some embodiments, referring to FIG. 4, the outer package may include a housing 51 and a cover plate 53. The housing 51 may include a bottom plate and side plates connected to the bottom plate, with the bottom plate and side plates enclosing to form an accommodating cavity. The housing 51 has an opening communicating with the accommodating cavity, and the cover plate 53 can cover the opening to seal the accommodating cavity. The positive electrode plate, negative electrode plate, and separator may be formed into an electrode assembly 52 through a winding process or a lamination process. The electrode assembly 52 is encapsulated in the accommodating cavity. The liquid electrolyte infiltrates the electrode assembly 52. The number of electrode assemblies 52 contained in the battery cell 5 may be one or more, and those skilled in the art may select according to actual needs.

The secondary battery may be a battery module 4 or a battery pack 1.

The battery module includes at least one battery cell. The number of battery cells contained in the battery module may be one or more, and those skilled in the art may select an appropriate number according to the application and capacity of the battery module.

FIG. 5 is a battery module 4 as an example. Referring to FIG. 5, in the battery module 4, multiple battery cells 5 may be sequentially arranged along the length direction of the battery module 4. Certainly, they may also be arranged in any other manner. Further, the multiple battery cells 5 may be fixed by fasteners.

Optionally, the battery module 4 may further include a casing with an accommodating space, in which the multiple battery cells 5 are accommodated.

In some embodiments, the above battery module may also be assembled into a battery pack, and the number of battery modules contained in the battery pack may be one or more, with those skilled in the art selecting an appropriate number according to the application and capacity of the battery pack.

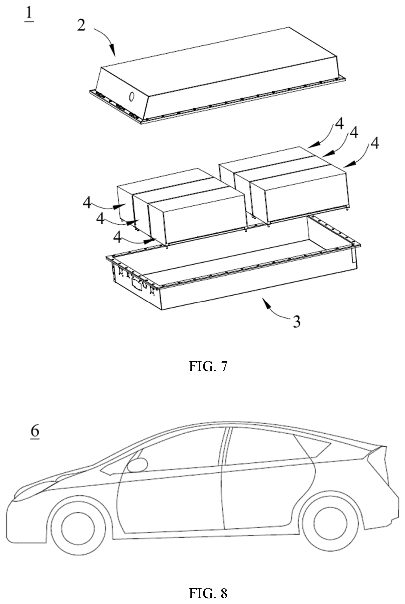

FIG. 6 and FIG. 7 are a battery pack 1 as an example. Referring to FIG. 6 and FIG. 7, the battery pack 1 may include a battery case and multiple battery modules 4 disposed in the battery case. The battery case includes an upper case 2 and a lower case 3, with the upper case 2 capable of covering the lower case 3 to form an enclosed space for accommodating the battery modules 4. The multiple battery modules 4 may be arranged in the battery case in any manner.

Additionally, the present application further provides an electric apparatus including the secondary battery provided by the present application. The secondary battery may be used as a power source for the electric apparatus or as an energy storage unit for the electric apparatus. The electric apparatus may include, but is not limited to, mobile devices, electric vehicles, electric trains, ships, satellites, and energy storage systems. The mobile devices may include, for example, mobile phones, laptops, and the like; the electric vehicles may include, for example, pure electric vehicles, hybrid electric vehicles, plug-in hybrid electric vehicles, electric bicycles, electric scooters, electric golf carts, electric trucks, and the like, but are not limited thereto.

As an electric apparatus, the secondary battery may be selected according to its usage requirements.

FIG. 8 is an electric apparatus 6 as an example. The electric apparatus 6 is a pure electric vehicle, a hybrid electric vehicle, or a plug-in hybrid electric vehicle, and the like. To meet the high power and high energy density requirements of the electric apparatus for secondary batteries, a battery pack or battery module may be used.

As another example, the device may be a mobile phone, tablet, laptop, and the like. Such devices typically require thinness and lightness, and a secondary battery may be used as the power source.

Hereinafter, examples of the present application are described. The examples described below are exemplary and are only used to explain the present application, and should not be construed as limiting the present application. For examples where techniques or conditions are not specified, they are carried out according to the techniques or conditions described in the literature in the field or according to product specifications. Reagents or instruments used without specifying the manufacturer are all conventional products commercially available.

### Example 1

### (1) Preparation of composite current collector

Potassium dichromate as the passivating agent was uniformly applied on the surface of a 5 µm thick conductive layer by gravure printing to form a 100 nm thick passivation layer, where the conductive layer was an aluminum layer;

A 6 µm thick PET (polyethylene terephthalate) film was subjected to corona treatment to achieve a dyne value of 42 and a roughness of 0.15 µm on both surfaces in the thickness direction, obtaining the support layer;

Polyurethane adhesive was applied on both surfaces of the support layer in the thickness direction, and then baked in an oven at 110°C to form a 500 nm thick adhesive layer;

The passivated thick conductive layer was laminated on both surfaces of the support layer in the thickness direction, pressed (pressing temperature of 100°C), and cured at a curing temperature of 85±5°C to obtain a composite current collector with a thick conductive layer;

Through a sodium hydroxide corrosion thinning process, the thickness of the thick conductive layer was reduced to 1000 nm, obtaining a composite current collector with a final conductive layer thickness of 1000 nm;

The roughness of the surface of the conductive layer away from the support layer was controlled to 1.2 µm through the corrosion thinning process.

### (2) Preparation of secondary battery

### (2.1) Preparation of positive electrode plate

The positive electrode active material NCM₈₁₁, conductive carbon black SP, and binder PVDF were dispersed in solvent NMP at a weight ratio of 98:1:1 and mixed uniformly to obtain a positive electrode slurry; the positive electrode slurry was uniformly applied on both surfaces of the composite current collector prepared in step (1) above, and after drying and cold pressing, a positive electrode plate was obtained with a compacted density of 3.4 g/cm³.

### (2.2) Preparation of negative electrode plate

The negative electrode active material graphite, thickener sodium carboxymethyl cellulose, binder styrene-butadiene rubber, and conductive agent acetylene black were mixed at a mass ratio of 97:1:1:1, deionized water was added, and a negative electrode slurry was obtained under the action of a vacuum mixer; the negative electrode slurry was uniformly applied on both surfaces of a copper foil; the copper foil was air-dried at room temperature and then transferred to a 120°C oven for drying for 1 hour, followed by cold pressing and slitting to obtain a negative electrode plate with a compacted density of 1.6 g/cm³.

### (2.3) Separator

A separator with PP composited on both sides of PE (PP/PE/PP) was selected.

### (2.4) Preparation of liquid electrolyte

The organic solvent was a mixed solution containing ethylene carbonate (EC) and ethyl methyl carbonate (EMC), with a volume ratio of EC to EMC of 30:70. In an argon atmosphere glove box with a water content <10 ppm (parts per million), fully dried lithium salt LiPF₆ was dissolved in the organic solvent and mixed uniformly to obtain a liquid electrolyte, where the concentration of the lithium salt was 1 mol/L (moles per liter).

### (2.5) Preparation of battery

The positive electrode plate, separator, and negative electrode plate were stacked in order, with the separator placed between the positive and negative electrode plates to provide isolation, and then wound into a bare cell; double-sided metal edging was used for roll-welding tab connection, and the cell was encased in an aluminum-plastic film, baked at 80°C to remove water, injected with non-aqueous liquid electrolyte, sealed, and subjected to processes such as standing, hot and cold pressing, formation, clamping, and capacity grading to obtain a finished battery.

### Examples 2-24

Substantially the same as Example 1, except that the preparation method of the composite current collector in step (1) was different, specifically in terms of changing the composition and thickness of the adhesive layer and the composition and thickness of the passivation layer, as detailed in Table 1.

### Example 25

Substantially the same as Example 1, except that the preparation method of the composite current collector in step (1) was different.

The preparation method of the composite current collector in this example was as follows:
Potassium dichromate as the passivating agent and polyurethane adhesive were mixed at a mass ratio of 1:1 to form a slurry, which was applied on the surface of a 5 µm thick conductive layer and then baked in an oven at 110°C to form a 700 nm thick adhesive layer.

A 6 µm thick PET film was subjected to corona treatment to achieve a dyne value of 42 and a roughness of 0.15 µm on both surfaces in the thickness direction, obtaining the support layer.

The passivated thick conductive layer was laminated on both surfaces of the support layer in the thickness direction, pressed (pressing temperature of 100°C), and cured at a curing temperature of 85±5°C to obtain a composite current collector with a thick conductive layer.

Through a sodium hydroxide corrosion thinning process, the thickness of the thick conductive layer was reduced to 1000 nm, obtaining a composite current collector with a final conductive layer thickness of 1000 nm.

The roughness of the surface of the conductive layer away from the support layer was controlled to 1.2 µm through the corrosion thinning process.

### Examples 26-43

Substantially the same as Example 1, except that the preparation method of the composite current collector in step (1) was different, specifically in terms of changing the composition and thickness of the adhesive layer, as detailed in Table 1.

### Comparative example 1

Substantially the same as Example 1, except that the preparation method of the composite current collector in step (1) was different;

The preparation method of the composite current collector in this comparative example was as follows:
A 6 µm thick PET film was subjected to corona treatment to achieve a dyne value of 42 and a roughness of 0.15 µm on both surfaces in the thickness direction, obtaining the support layer.

A conductive layer was prepared on both surfaces of the support layer in the thickness direction using an evaporation method, with a single-side thickness of the conductive layer being 1000 nm, and the roughness of the surface of the conductive layer away from the support layer was controlled to 1.2 µm by adjusting the number of evaporation cycles and the wire feed speed to change the deposited grain size.

The adhesives and passivating agents used in the composite current collectors prepared in Examples 1-43 were all commercially available.

The product parameters of the composite current collectors prepared in Examples 1-43 and Comparative Example 1 are shown in Tables 1 and 2.

### Product parameter testing and performance testing

### (1) Test method for the molar ratio of isocyanate groups to hydroxyl groups

### (1.1) Test method for isocyanate groups

The content of isocyanate groups in the adhesive was tested using potentiometric titration. Specific steps were as follows: 0.2 g to 0.3 g (grams) of the sample was weighed into a 250 mL (milliliter) beaker, 10 mL of chloroform was added to dissolve the sample, 20.00 mL of 0.2 mol/L dibutylamine chlorobenzene solution was accurately added using a pipette. After reacting for 30 min (minutes) to ensure completion, 150 mL of anhydrous ethanol was added. Magnetic stirring was then performed, and a reference electrode and a composite electrode were inserted. Under continuous stirring, potentiometric titration was carried using a 0.1 mol/L hydrochloric acid standard solution, and the corresponding volume and pH were recorded during titrating. Near the endpoint, the pH value was recorded after each incremental addition (0.1 mL) of the titrant, and titration was stopped once the pH change becomes slow. A blank experiment was conducted simultaneously. ${W}_{1} \left(%\right) = \left({V}_{0}-{V}_{1}\right) * C * 4.202 / m$

In Formula I, W₁ is the mass percentage of isocyanate groups in the adhesive, V₁ is the volume of HCl standard solution consumed in the blank experiment (mL), V₀ is the volume of HCl standard solution consumed in the experiment (mL), C is the actual concentration of the hydrochloric acid standard solution (mol/L), and m is the mass of the sample.

### (1.2) Test method for hydroxyl groups

Using toluene sulfonic acid as a catalyst, in ethyl acetate, an acetylation reaction was performed between acetic anhydride and hydroxyl, excess acetic anhydride was hydrolyzed with a mixed solution of pyridine and water, and the generated acetic acid was titrated with a sodium hydroxide standard titration solution to calculate the content of hydroxyl groups in the adhesive.

Specific steps were as follows: A sample (sample amount is approximately 145 / estimated hydroxyl value; if the estimated hydroxyl value is 70 mg KOH/g, then 145 / 70 = 2 g) was weighed into a 250 mL iodine flask, 10 mL of acetylating agent was added, and the flask was capped. The flask was heated in a water bath at (50 ± 2)°C and shaken to uniformly dissolve the sample. The mixture was then heated at 50°C for 20 min (being shaken every few minutes). The iodine flask was removed and cooled, the flask mouth, cap, and walls were rinsed with 10 mL to 20 mL of a hydrolysis solution of pyridine:water at a volume ratio of 3:1, and then the flask was left to stand for 5 min to hydrolyze the excess acetic anhydride. 3 to 5 drops of 1% phenolphthalein indicator were added. Titration was performed with a 0.5 mol/L sodium hydroxide standard titration solution until a peach-pink color appeared that did not fade within 15 s, indicating the endpoint. A blank experiment was conducted simultaneously using the same method. $Qv = 56.1 * \left({V}_{3}-{V}_{2}\right) * c / {m}_{0} + Av$

In Formula II, Qv is the hydroxyl value of the sample (mg KOH/g); V₂ is the volume of sodium hydroxide standard titration solution consumed in the blank titration (mL); V₃ is the volume of sodium hydroxide standard titration solution consumed in the sample titration (mL); c is the concentration of the sodium hydroxide standard titration solution (mol/L); m₀ is the mass of the sample (g); 56.1 is the molar mass of potassium hydroxide (g/mol); and Av is the acid value of the sample (mg KOH/g).

Based on the W₁ and Qv values obtained from steps (1.1) and (1.2), the molar ratio of isocyanate groups to hydroxyl groups in the adhesive was calculated.

### (2) Test method for layer thickness

A cross-sectional sample of the composite current collector was prepared using liquid nitrogen quenching or argon ion etching, and the secondary electron morphology of the sample cross-section was observed using a scanning electron microscope with magnification (1000-30,000 times), achieving a minimum resolution at the nanometer level, and the thickness of the support layer, adhesive layer, passivation layer, or conductive layer was measured.

### (3) Test method for phosphorus, chromium, and materials in the conductive layer

Testing was performed using ICP (Inductively Coupled Plasma) elemental analysis.

### (4) Test method for peel strength between support layer and conductive layer

The composite current collector was laminated with the non-corona-treated side of an EAA (ethylene-acrylic acid copolymer) film. Subsequently, a 12 µm PET film was placed over the EAA film and laminated using a heat-sealing machine at a temperature of 120°C and a pressure of 0.2 MPa. The laminated sample was cut into samples 100 mm (millimeters) long and 20 mm wide, and the non-laminated side of the conductive layer was adhered to a steel plate using 3M double-sided tape; the sample was clamped in the fixtures of a tensile testing machine, and a 180°C peel test was conducted at a spacing of 50 mm and a speed of 300 mm/min (millimeters per minute), the peel strength was recorded and converted to units of N/m, with five parallel samples tested, and the average peel strength of the five parallel samples was taken.

### (5) Test method for peel strength between support layer and conductive layer after liquid electrolyte immersion of composite current collector

The composite current collector was cut into 30 mm × 10 mm samples, placed in an aluminum-plastic film, encapsulated with 20 g of liquid electrolyte added, and subjected to high-temperature immersion at 60°C. After 72 hours, the samples were removed for peel strength testing. The sample was laminated with the non-corona-treated side of an EAA film. Subsequently, a 12 µm PET film was placed over the EAA film and laminated using a heat-sealing machine at a temperature of 120°C and a pressure of 0.2 MPa. The laminated sample was cut into samples 100 mm long and 20 mm wide, and the non-laminated side of the conductive layer was adhered to a steel plate using 3M double-sided tape; the sample was clamped in the fixtures of a tensile testing machine, and a 180°C peel test was conducted at a spacing of 50 mm and a speed of 300 mm/min, the peel strength was recorded and converted to units of N/m, with three parallel samples tested, and the average peel strength of the three parallel samples was taken.

The test results of the peel strength between the support layer and the conductive layer for the composite current collectors prepared in Examples 1-43 and Comparative Example 1 are shown in Table 3.

**Table 1**

| Group | Adhesive type | Molar ratio of isocyanate to hydroxyl groups in adhesive | Mass proportion of adhesive based on adhesive layer mass (%) | Adhesive layer thickness (nm) | Passivating agent type | Passivation layer thickness (nm) | Ratio of adhesive layer to passivation layer thickness | Support layer thickness (µm) | Mass proportion of phosphorus and/or chromiu m based on composite current collector mass (%) | Mass proportion of conductive material based on conductive layer mass (%) |
|---|---|---|---|---|---|---|---|---|---|---|
| Example 1 | polyurethane | 0.98 | 100 | 500 | potassium dichromate | 100 | 5 | 6 | 0.05 | 99.7 |
| Example 2 | polyurethane | 0.85 | 100 | 500 | potassium dichromate | 100 | 5 | 6 | 0.05 | 99.7 |
| Example 3 | polyurethane | 0.9 | 100 | 500 | potassium dichromate | 100 | 5 | 6 | 0.05 | 99.7 |
| Example 4 | polyurethane | 1 | 100 | 500 | potassium dichromate | 100 | 5 | 6 | 0.05 | 99.7 |
| Example 5 | polyurethane | 1.2 | 100 | 500 | potassium dichromate | 100 | 5 | 6 | 0.05 | 99.7 |
| Example 6 | polyurethane | 1.5 | 100 | 500 | potassium dichromate | 100 | 5 | 6 | 0.05 | 99.7 |
| Example 7 | polyurethane | 0.8 | 100 | 500 | potassium dichromate | 100 | 5 | 6 | 0.05 | 99.7 |
| Example 8 | polyurethane | 1.6 | 100 | 500 | potassium dichromate | 100 | 5 | 6 | 0.05 | 99.7 |
| Example 9 | polyurethane | 0.98 | 100 | 200 | potassium dichromate | 100 | 2 | 6 | 0.05 | 99.7 |
| Example 10 | polyurethane | 0.98 | 100 | 300 | potassium dichromate | 100 | 3 | 6 | 0.05 | 99.7 |
| Example 11 | polyurethane | 0.98 | 100 | 700 | potassium dichromate | 100 | 7 | 6 | 0.05 | 99.7 |
| Example 12 | polyurethane | 0.98 | 100 | 900 | potassium dichromate | 100 | 9 | 6 | 0.05 | 99.7 |
| Example 13 | polyurethane | 0.98 | 100 | 180 | potassium dichromate | 100 | 1.8 | 6 | 0.05 | 99.7 |
| Example 14 | polyurethane | 0.98 | 100 | 1500 | potassium dichromate | 100 | 15 | 6 | 0.05 | 99.7 |
| Example 15 | polyurethane | 0.98 | 100 | 500 | potassium dichromate | 10 | 50 | 6 | 0.05 | 99.7 |
| Example 16 | polyurethane | 0.98 | 100 | 500 | potassium dichromate | 50 | 10 | 6 | 0.03 | 99.8 |
| Example 17 | polyurethane | 0.98 | 100 | 500 | potassium dichromate | 200 | 2.5 | 6 | 0.1 | 99.7 |
| Example 18 | polyurethane | 0.98 | 100 | 500 | potassium dichromate | 500 | 1 | 6 | 0.3 | 99.5 |
| Example 19 | polyurethane | 0.98 | 100 | 500 | potassium dichromate | 1 | 500 | 6 | 0.001 | 99.9 |
| Example 20 | polyurethane | 0.98 | 100 | 500 | potassium dichromate | 5 | 100 | 6 | 0.01 | 99.8 |
| Example 21 | polyurethane | 0.98 | 100 | 500 | potassium dichromate | 530 | 0.94 | 6 | 0.35 | 99.3 |
| Example 22 | epoxy resin | 0 | 100 | 200 | potassium dichromate | 100 | 2 | 6 | 0.05 | 99.8 |
| Example 23 | polyurethane | 0.98 | 100 | 200 | hydroxyethylid ene diphosphonic acid | 100 | 2 | 6 | 0.03 | 99.8 |
| Example 24 | polyurethane | 0.98 | 100 | 200 | diethylenetriam ine penta(methylene phosphonic acid) | 100 | 2 | 6 | 0.03 | 99.8 |
| Comparative Example 1 | / | / | / | / | / | / | / | 8 | 0.0001 | 99.8 |

| | | | | | | | | | | |
|---|---|---|---|---|---|---|---|---|---|---|
| In Table 1, "/" indicates the absence of the substance or parameter. | | | | | | | | | | |

**Table 2**

| Group | Adhesive type | Molar ratio of isocyanate to hydroxyl groups in adhesive | Mass proportion of adhesive based on adhesive layer mass (%) | Passivating agent type | Mass ratio of adhesive to passivating agent | Adhesive layer thickness (nm) | Support layer thickness (µm) | Mass proportion of phosphorus and/or chromium based on composite current collector mass (%) | Mass proportion of conductive material based on conductive layer mass (%) |
|---|---|---|---|---|---|---|---|---|---|
| Example 25 | polyurethane | 0.98 | 50 | potassium dichromate | 1 | 700 | 6 | 0.1 | 99.5 |
| Example 26 | polyurethane | 0.98 | 55 | potassium dichromate | 1.2 | 700 | 6 | 0.07 | 99.7 |
| Example 27 | polyurethane | 0.98 | 60 | potassium dichromate | 1.5 | 700 | 6 | 0.06 | 99.7 |
| Example 28 | polyurethane | 0.98 | 67 | potassium dichromate | 2 | 700 | 6 | 0.05 | 99.7 |
| Example 29 | polyurethane | 0.98 | 71 | potassium dichromate | 2.5 | 700 | 6 | 0.04 | 99.7 |
| Example 30 | polyurethane | 0.98 | 72 | potassium dichromate | 2.6 | 700 | 6 | 0.01 | 99.8 |
| Example 31 | polyurethane | 0.98 | 47 | potassium dichromate | 0.9 | 700 | 6 | 0.35 | 99.4 |
| Example 32 | polyurethane | 0.98 | 60 | potassium dichromate | 1.5 | 180 | 6 | 0.06 | 99.7 |
| Example 33 | polyurethane | 0.98 | 60 | potassium dichromate | 1.5 | 200 | 6 | 0.06 | 99.7 |
| Example 34 | polyurethane | 0.98 | 60 | potassium dichromate | 1.5 | 300 | 6 | 0.06 | 99.7 |
| Example 35 | polyurethane | 0.98 | 60 | potassium dichromate | 1.5 | 500 | 6 | 0.06 | 99.7 |
| Example 36 | polyurethane | 0.98 | 60 | potassium dichromate | 1.5 | 700 | 6 | 0.06 | 99.7 |
| Example 37 | polyurethane | 0.98 | 60 | potassium dichromate | 1.5 | 1200 | 6 | 0.06 | 99.7 |
| Example 38 | polyurethane | 0.98 | 60 | potassium dichromate | 1.5 | 1500 | 6 | 0.06 | 99.7 |
| Example 39 | polyurethane | 0.98 | 60 | potassium dichromate | 1.5 | 1600 | 6 | 0.06 | 99.7 |
| Example 40 | epoxy resin | 0 | 50 | potassium dichromate | 1 | 700 | 6 | 0.05 | 99.7 |
| Example 41 | polyurethane | 0.98 | 50 | hydroxyethylidene diphosphonic acid | 1 | 700 | 6 | 0.1 | 99.5 |
| Example 42 | polyurethane | 0.98 | 50 | diethylenetriamine penta(methylene phosphonic acid) | 1 | 700 | 6 | 0.1 | 99.5 |
| Example 43 | polyurethane | 0.98 | 100 | / | / | 700 | 6 | 0.0001 | 99.8 |

**Table 3**

| Group | Peel strength between support layer and conductive layer (N/m) | Peel strength between support layer and conductive layer after liquid electrolyte immersion (N/m) |
|---|---|---|
| Example 1 | 405 | 400 |
| Example 2 | 199 | 196 |
| Example 3 | 272 | 260 |
| Example 4 | 401 | 398 |
| Example 5 | 265 | 261 |
| Example 6 | 201 | 195 |
| Example 7 | 178 | 174 |
| Example 8 | 176 | 172 |
| Example 9 | 195 | 190 |
| Example 10 | 280 | 263 |
| Example 11 | 412 | 403 |
| Example 12 | 555 | 540 |
| Example 13 | 188 | 185 |
| Example 14 | 580 | 570 |
| Example 15 | 404 | 260 |
| Example 16 | 405 | 303 |
| Example 17 | 402 | 399 |
| Example 18 | 403 | 403 |
| Example 19 | 400 | 88 |
| Example 20 | 407 | 120 |
| Example 21 | 406 | 400 |
| Example 22 | 172 | 170 |
| Example 23 | 191 | 166 |
| Example 24 | 195 | 163 |
| Example 25 | 186 | 183 |
| Example 26 | 288 | 270 |
| Example 27 | 295 | 289 |
| Example 28 | 301 | 288 |
| Example 29 | 308 | 256 |
| Example 30 | 312 | 170 |
| Example 31 | 175 | 173 |
| Example 32 | 174 | 170 |
| Example 33 | 188 | 180 |
| Example 34 | 262 | 258 |
| Example 35 | 301 | 295 |
| Example 36 | 298 | 290 |
| Example 37 | 285 | 280 |
| Example 38 | 310 | 306 |
| Example 39 | 315 | 310 |
| Example 40 | 168 | 165 |
| Example 41 | 185 | 152 |
| Example 42 | 187 | 151 |
| Example 43 | 401 | 101 |
| Comparative Example 1 | 161 | 30 |

From Tables 1-3, it can be seen that the composite current collector in Comparative Example 1, which lacks an adhesive layer between the support layer and the conductive layer, has significantly lower peel strength between the support layer and the conductive layer compared to the composite current collectors in Examples 1-43. Additionally, after immersion of the composite current collector in liquid electrolyte, the peel strength between the support layer and the conductive layer in Examples 1-43 remains relatively high. This indicates that in Examples 1-43 of the present application, the connection of the support layer and the conductive layer via the adhesive layer effectively enhances the peel strength between the support layer and the conductive layer and reduces the risk of delamination of the composite current collector under prolonged exposure to liquid electrolyte.

The descriptions of the various embodiments above tend to emphasize the differences between the embodiments, and their similarities or identical aspects can be cross-referenced for brevity and are not repeated herein.

It should be noted that the present application is not limited to the above embodiments. The above embodiments are merely exemplary, and any embodiments within the technical scope of the present application that have substantially the same structure and achieve the same effects as the technical concept are included within the technical scope of the present application. Furthermore, without departing from the gist of the present application, various modifications that those skilled in the art can conceive and other configurations formed by combining some of the constituent elements of the embodiments are also included within the scope of the present application.

## Claims

1. A composite current collector comprising a support layer, an adhesive layer, and a conductive layer, wherein the adhesive layer and the conductive layer are sequentially laminated on two opposite surfaces of the support layer in a direction away from the support layer.

2. The composite current collector according to claim 1, wherein the adhesive layer comprises an adhesive, the adhesive comprising one or more of an adhesive composition, polyurethane, epoxy resin, polyacrylate, polyvinyl acetate, unsaturated polyester, phenolic resin, urea-formaldehyde resin, polyolefin resin, silicone resin, ethylene-acrylic acid copolymer, ethylene-vinyl acetate copolymer, ethylene-vinyl alcohol copolymer, acrylic resin, polycarbonate, and polyamide, wherein the adhesive composition comprises isocyanate and polyester polyol.

3. The composite current collector according to claim 2, wherein the adhesive comprises one or more of the adhesive composition and the polyurethane.

4. The composite current collector according to claim 2 or 3, wherein the adhesive contains isocyanate groups and hydroxyl groups, and a molar ratio of the isocyanate groups to the hydroxyl groups is 0.85 to 1.5.

5. The composite current collector according to claim 4, wherein the molar ratio of the isocyanate groups to the hydroxyl groups is 0.9 to 1.

6. The composite current collector according to any one of claims 1 to 5, wherein a peel strength between the support layer and the conductive layer is greater than or equal to 150 N/m.

7. The composite current collector according to any one of claims 1 to 6, wherein the peel strength between the support layer and the conductive layer is 150 N/m to 600 N/m.

8. The composite current collector according to any one of claims 2 to 7, wherein, based on a mass of the adhesive layer, a mass proportion of the adhesive is 50% to 100%.

9. The composite current collector according to any one of claims 2 to 8, wherein a thickness of the adhesive layer is 200 nm to 1500 nm.

10. The composite current collector according to any one of claims 2 to 9, wherein the thickness of the adhesive layer is 300 nm to 700 nm.

11. The composite current collector according to any one of claims 2 to 10, wherein the adhesive layer further comprises a passivating agent, and a mass ratio of the adhesive to the passivating agent is 1 to 2.5.

12. The composite current collector according to claim 11, wherein the mass ratio of the adhesive to the passivating agent is 1.2 to 2.

13. The composite current collector according to any one of claims 1 to 12, wherein the composite current collector further comprises a passivation layer, the passivation layer being disposed between the adhesive layer and the conductive layer, wherein the passivation layer comprises the passivating agent.

14. The composite current collector according to claim 13, wherein the passivation layer has one or more of the following features:
(1) a ratio of a thickness of the adhesive layer to a thickness of the passivation layer is greater than or equal to 1; and
(2) the thickness of the passivation layer is 1 nm to 500 nm.

15. The composite current collector according to any one of claims 11 to 14, wherein the passivating agent comprises one or more of organic phosphate, chromate, dichromate, Al₂O₃, SiO₂, and Si₃N₄.

16. The composite current collector according to claim 15, wherein the passivating agent comprises one or more of the organic phosphate, the chromate, and the dichromate, and based on a mass of the composite current collector, a mass proportion of phosphorus and/or chromium is less than or equal to 0.3%.

17. The composite current collector according to any one of claims 1 to 16, wherein the support layer has one or more of the following features:
(1) a surface of the support layer adjacent to the adhesive layer has a dyne value ≥40; and
(2) a surface of the support layer adjacent to the adhesive layer has a roughness ≥0.1 µm.

18. The composite current collector according to any one of claims 1 to 17, wherein a surface of the conductive layer away from the adhesive layer has a roughness of 0.1 µm to 2 µm.

19. The composite current collector according to any one of claims 1 to 18, wherein a thickness of the conductive layer is 500 nm to 2500 nm.

20. The composite current collector according to any one of claims 1 to 19, wherein the conductive layer comprises a conductive material, and based on a mass of the conductive layer, a mass proportion of the conductive material is greater than or equal to 99.5%.

21. The composite current collector according to any one of claims 1 to 20, wherein a thickness of the support layer is 2 µm to 40 µm.

22. The composite current collector according to any one of claims 1 to 21, wherein the support layer comprises one or more of a polymer material and a polymer-based composite material; wherein
the polymer-based composite material comprises the polymer material and an additive, the additive comprising one or more of a metallic material and an inorganic non-metallic material.

23. A preparation method of the composite current collector according to any one of claims 1 to 22, comprising:
forming the adhesive layer and the conductive layer sequentially laminated on two opposite surfaces of the support layer in a direction away from the support layer.

24. The preparation method according to claim 23, wherein forming the adhesive layer and the conductive layer sequentially laminated comprises:
applying a first slurry containing the adhesive to a surface of at least one of the support layer and the conductive layer, and curing the first slurry to form the adhesive layer.

25. The preparation method according to claim 24, wherein the first slurry further comprises the passivating agent, and a mass ratio of the adhesive to the passivating agent in the first slurry is 1 to 2.5.

26. The preparation method according to any one of claims 23 to 25, further comprising: forming the passivation layer between the adhesive layer and the conductive layer;
wherein forming the passivation layer comprises: applying a second slurry containing the passivating agent to a surface of the conductive layer, and curing the second slurry to form the passivation layer.

27. The preparation method according to claim 25 or 26, wherein the passivating agent comprises one or more of organic phosphate, chromate, dichromate, Al₂O₃, SiO₂, and Si₃N₄.

28. An electrode plate comprising at least one of the composite current collector according to any one of claims 1 to 22 and the composite current collector prepared by the preparation method according to any one of claims 23 to 27.

29. A battery comprising the composite current collector according to any one of claims 1 to 22 or the electrode plate according to claim 28.

30. An electric apparatus comprising the battery according to claim 29.
